# EUROPÄISCHE PATENTSCHRIFT

(11) **EP 0 901 434 B1**
(45) Veröffentlichungstag und Bekanntmachung des Hinweises auf die Patenterteilung: **17.10.2001**
(21) Anmeldenummer: 97925940.5
(22) Anmeldetag: 23.05.1997
(51) Int. Cl.: B60R 21/26, C06D 5/00

(54) **GASGENERATOR**
GAS GENERATOR
GENERATEUR DE GAZ

(30) Priorität: 24.05.1996 DE 19621045
(43) Veröffentlichungstag der Anmeldung: 17.03.1999
(73) Patentinhaber: Autoflator AB, 447 21 Vargarda (SE); L'AIR LIQUIDE S.A., 75321 Paris Cédex 07 (FR)
(72) Erfinder: ERIKSSON, Dan, S-502 34 Boras (SE); KARINTHI, Pierre, F-78350 Jouy-en-Josas (FR); GASTIGER, Michel, F-91400 Orsay (FR)
(74) Vertreter: Gossel, Hans K., Dipl.-Ing.
(86) Internationale Anmeldenummer: EP9702646
(87) Internationale Veröffentlichungsnummer: WO9745298

(56) Entgegenhaltungen:
- EP-A- 0 621 160
- WO-A-96/10496
- DE-C- 4 135 776
- GB-A- 2 270 742

## Beschreibung

Die Erfindung betrifft einen Gasgenerator, vorzugsweise für ein aufblasbares Aufprallkissen zum Schutz von Kraftfahrzeug-Insassen, bestehend aus einem ein brennbares Gasgemisch enthaltenden und mit einem Verschluß versehenen Behälter, der in eine mit einem Gasauslaß versehene Verbrennungskammer mündet, in der das Gasgemisch durch eine Zündeinrichtung gezündet wird.

Bei einem aus DE-41 35 776 C1 bekannten Gasgenerator dieser Art enthält der Behälter ein Flüssiggas aus einem Gemisch eines oderer mehrerer kurzkettiger Kohlenwasserstoffe und Distickstoffmonoxid als Oxidationsmittel, das nach Initiieren des Gasgenerators in die Verbrennungskammer eingespritzt und in dieser durch eine Anzündvorrichtung mit einer Anzündladung gezündet wird. Dabei entzünden die Anzündschwaden und heißen Verbrennungsgase das Flüssiggas, das aufgrund der auftretenden Expansion im Verbrennungsraum verdampft und sich verflüchtigt. Bei dem bekannten Gasgenerator setzt sich das entzündete Gasgemisch explosionsartig um, so daß die Brennkammer zerstörende Gasdruckspitzen auftreten können. Um die hohe Umsetzgeschwindigkeit zu verringern, wird daher bei dem bekannten Gasgenerator dem Gasgemisch ein Inertgas aus Kohlendioxid und/oder Xenon in einer Menge von vorzugsweise 10 bis 80 Gew.-% zugesetzt.

Der bekannte Gasgenerator ist nicht nur wegen der hohen Umsetzungsgeschwindigkeit, die lediglich durch den Zusatz von Inertgas gemildert wird, sondern auch wegen der Verwendung von Flüssiggas nachteilig, das vor seiner Zündung verdampfen muß, was das Zuführen zusätzlicher Energie erfordert. Dieses Verdampfen erfordert Zeit. Weiterhin hat die hohe Konzentration von Brenngas eine sehr hohe Temperatur der Verbrennungsgase zur Folge, was eine zusätzliche Gefahr bedeutet, wenn Lecks entstehen sollten.

DE-41 35 776 C1 beschreibt einen gattungsgemäßen Gasgenerator mit den Merkmalen des Oberbegriffs des Anspruchs 1.

GB-A-2270742 zeigt einen Gasgenerator für ein aufblasbares Aufprallkissen zum Schutz von Kfz-Insassen, bestehend aus einem ein brennbares Gasgemisch enthaltenden und mit einem Verschluß versehenen Behälter, der in einer mit einem Gasauslaß versehenen Verbrennungskammer mündet, in der das Gasgemisch durch eine Zündeinrichtung gezündet wird. Der Behälter ist hauptsächlich mit unter Druck stehendem Inertgas gefüllt und enthält einen gasförmigen Brennstoff wie auch ein gasförmiges Oxidationsmittel. Beim Initiieren öffnet die Zündeinrichtung den Behälterverschluß und zündet das in die Verbrennungskammer strömende Gasgemisch, woraufhin eine selbsttätige Verbrennung des Gasgemisches folgt.

Aufgabe der Erfindung ist es, einen Gasgenerator der eingangs angegebenen Art zu schaffen, der nach Initiierung der Zündeinrichtung schnell anspricht, mit beherrschbarer Strömung ein Druckgas mit ziemlich geringer Temperatur erzeugt und der auch ganz sicher ist.

Diese Aufgabe wird mit einem Gasgenerator mit den Merkmalen des Anspruches 1 gelöst. Bevorzugte Ausführungsformen sind Gegenstand der Unteransprüche.

Wegen der geringen Konzentration der Anteile von brennbarem Gas und gasförmigem Oxidationsmittel an dem gesamten Gasgemisch wird die Verbrennung des in die Verbrennungskammer strömenden Gasgemisches nach der initiierenden Zündung nicht selbsttätig aufrechterhalten, so daß die Zündeinrichtung die Verbrennung des Gasgemisches in der Verbrennungskammer aufrechterhalten muß. Dennoch erzeugt der erfindungsgemäße Gasgenerator einen Gasstrom mit der erforderlichen Strömungsgeschwindigkeit, da das in die Verbrennungskammer strömende Gas sofort gezündet wird und nicht erst verdampfen muß, um ein zündfähiges Gemisch zu bilden.

Wegen des hohen Anteils von Inertgas an dem Gasgemisch und wegen der Benutzung eines Katalysators kann die Temperatur des Verbrennungsgases niedrig gehalten werden, beispielsweise im Bereich von 400° Celsius und niedriger.

Nach einer bevorzugten Ausführungsform ist vorgesehen, daß mindestens die Hälfte des gasförmigen Brennstoffs ein Kohlenwasserstoff oder Wasserstoff ist. Das brennbare Gas kann aus CH₄, C₂H₆, C₃H₈, C₄H₁₀ oder H₂ oder einer Mischung davon bestehen.

Vorzugsweise aber CH₄ oder C₃H₈.

Das gasförmige Oxidationsmittel besteht zweckmäßigerweise aus O₂, N₂O oder H₂O₂.

Zweckmäßigerweise besteht das Oxidationsmittel aus O₂.

Das Inertgas ist vorzugsweise Ar, aber auch N₂ kann benützt werden.

Nach einer besonders vorteilhaften Ausgestaltung ist vorgesehen, daß der gasförmige Brennstoff 0 bis 70 Vol %, vorzugsweise etwa 50 Vol. % gesättigten Kohlenwasserstoff, zusätzlich einen ungesättigten Kohlenwasserstoff, beispielsweise C₂H₂ oder C₂H₄, enthält.

Der Zusatz ungesättigter Kohlenwasserstoffe führt zu einer besseren Zündung des Gasgemisches, so daß er dazu dient, die Verbrennung des Gasgemisches enthaltend Alkane und Oxidationsmittel zu initiieren und zu beschleunigen.

Zweckmäßigerweise beträgt der Druck des Gasgemisches in dem Behälter 100 bis 300 bar und vorzugsweise etwa 180 bis 280 bar.

Die Zündeinrichtung kann aus einer festen oder flüssigen pyrotechnischen Ladung bestehen, die außerhalb des Behälters angeordnet ist.

Als Zündeinrichtung kann auch ein Laser dienen.

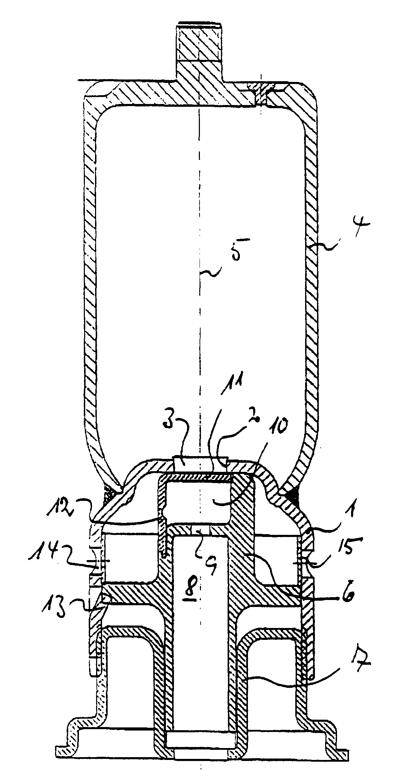

Ein Ausführungsbeispiel der Erfindung wird nachstehend anhand der Zeichnung näher erläutert, in deren einziger Figur ein Schnitt durch den Gasgenerator dargestellt ist.

Der Gasgenerator besteht aus einem glockenförmigen Gehäuseteil 1, das an seinem oberen Ende mit einer Öffnung 2 versehen ist, die durch eine dichtende Scheibe 3 geschlossen ist. Mit dem glockenförmigen Gehäuseteil 1 ist der Rand eines Druckbehälters 4 in der Weise verschweißt, daß die Mittellinie der Öffnung 2 mit der Mittellinie 5 des Druckbehälters übereinstimmt.

In dem glockenförmigen Gehäuseteil 1 sind Teile 6, 7 gehaltert, von denen das mittlere Teil 6 eine zylindrische Kammer 8 besitzt, die der Aufnahme einer pyrotechnischen Ladung dient. Die Kammer 8 ist durch eine Bohrung 9 in ihrer Deckwandung mit der Brennkammer 10 verbunden. Die Brennkammer 10 ist durch ein winkeliges Verschlußstück geschlossen, von dem der obere Schenkel 11 parallel zu der mit der Bohrung 2 versehenen Deckwandung des glockenförmigen Gehäuseteils 1 verläuft und im inaktiven Zustand die dichtende Scheibe 3 abstützt. Der andere Schenkel 12 des Verschlußstücks greift mit einer Nase in einen Hinterschnitt des Einsatzteils 6, so daß das Verschlußstück in der dargestellten inaktiven Lage in seiner Verschlußstellung gesichert ist.

Das Einsatzteil 6 ist in seiner dargestellten Lage durch das Einsatzteil 7 gesichert. Die Einsatzteile 6 und 7 sind formschlüssig mit dem glockenförmigen Gehäuseteil verbunden, wobei zur Halterung und Verrastung aus dem Mantel des glockenförmigen Gehäuseteils 1 eine Zunge 13 einwärts gebogen sein kann.

Der Druckbehälter 4 ist an seinem oberen Ende mit einem mit einem Gewinde versehenen Zapfen zu seiner Befestigung und einer durch einen Schraubstopfen verschlossenen Öffnung versehen, durch die er befüllt werden kann.

Der Druckbehälter 4 weist vorzugsweise ein Volumen von etwa 350 cm³ auf und ist mit einem Gasgemisch befüllt, das unter einem Druck von 180 bis 280 bar stehen kann (üblicherweise etwa 230 bar).

In der Kammer 8 kann sich beispielsweise eine pyrotechnische Ladung von 3 - 8 g, abhängig von der Gasmischung, befinden, die aus einem Feststoff oder einer Flüssigkeit bestehen kann. Die pyrotechnische Ladung enthält einen brennbaren Stoff und ein Oxidationsmittel, die sich vorzugsweise in einem stöchiometrischen Verhältnis befinden, und die eine Brennzeit aufweisen, die der Entleerungszeit des Behälters entspricht.

Die pyrotechnische Ladung kann beispielsweise durch eine elektrische Zündeinrichtung gezündet werden.

Im Falle der Zündung der pyrotechnischen Ladung treten die Verbrennungsgase durch die Bohrung 9 in die Brennkammer 10 ein, so daß aufgrund des in der Brennkammer 10 entstehenden Drucks der Schenkel 12 unter Lösung seiner Verrastung nach links hin ausschwenkt und dadurch die Öffnung 2 freigibt. Während des Einströmens des Gasgemisches in die Verbrennungskammer 10 unterhält die pyrotechnische Ladung den Verbrennungsvorgang. Die Verbrennungsgase treten durch die Bohrung 14 in dem glockenförmigen Gehäuseteil 1 aus und gelangen von dieser beispielsweise in ein aufblasbares Aufprallkissen.

Die Kammer 8 könnte statt einer pyrotechnischen Ladung auch einen Laser aufnehmen, der dann die Zündung initiiert und aufrechterhält.

Die Öffnungen oder Bohrungen 14 in dem glockenförmigen Gehäuseteil 1 sind in der dargestellten Weise durch ein Netz 15 geschlossen, das aus einem Drahtgewebe aus Pt oder Rh oder aus Drähten mit der entsprechenden Maschenweite besteht, die mit Pt oder Rh beschichtet sind. Das Netz 15 ist ringförmig ausgebildet.

## Patentansprüche

1. Gasgenerator, vorzugsweise für ein aufblasbares Aufprallkissen zum Schutz von Kraftfahrzeug-Insassen, mit einem ein brennbares Gasgemisch enthaltenden und mit einem Verschluß (3, 11) versehenen Behälter (4), der in eine mit einem Gasauslaß (14) versehene Verbrennungskammer (10) mündet, in der das Gasgemisch durch eine Zündeinrichtung gezündet wird,
**dadurch gekennzeichnet, daß**
der Behälter (4) hauptsächlich mit unter Druck stehendem Inertgas gefüllt ist und 0,1 bis 5,0 Vol. % eines gasförmigen Brennstoffs und 0,5 bis 20 Vol % eines gasförmigen Oxidationsmittels in der Weise enthält, daß die niedrige Konzentration an Brennstoff nach dessen Zündung die Verbrennung nicht selbsttätig aufrecht erhält, und wobei die Zündeinrichtung bei ihrem Initiieren den Behälterverschluß (11) öffnet, das in die Verbrennungskammer (10) strömende Gasgemisch zündet und die Verbrennung durch kontinuierliche Zufuhr von Energie aufrechterhält.

2. Gasgenerator nach Anspruch 1, **dadurch gekennzeichnet, daß** der gasförmige Brennstoff von 0,2 bis 0,5 Vol. % und der Anteil des gasförmigen Oxidationsmittels 1 bis 3 Vol. % des Gasgemisches beträgt.

3. Gasgenerator nach Anspruch 1 oder 2, **dadurch gekennzeichnet, daß** mindestens die Hälfte des Kohlenwasserstoffs ein gasförmiges Alkane ist.

4. Gasgenerator nach einem der Ansprüche 1 bis 3, **dadurch gekennzeichnet, daß** das Alkane CH₄, C₂H₆, C₃H₈ oder C₄H₁₀ ist.

5. Gasgenerator nach Anspruch 4, **dadurch gekennzeichnet, daß** das Alkane C₃H₈ ist.

6. Gasgenerator nach einem der Ansprüche 1 bis 5, **dadurch gekennzeichnet, daß** das gasförmige Oxidationsmittel O₂, N₂O oder H₂O₂ ist.

7. Gasgenerator nach Anspruch 6, **dadurch gekennzeichnet, daß** das Oxidationsmittel O₂ ist.

8. Gasgenerator nach einem der Ansprüche 1 bis 7, **dadurch gekennzeichnet, daß** das Inertgas Ar ist.

9. Gasgenerator nach einem der Ansprüche 1 bis 8, **dadurch gekennzeichnet, daß** der gasförmige Brennstoff 0 bis 70 Vol. % und vorzugsweise etwa 50 Vol. % Kohlenwasserstoff zusätzlich einen ungesättigten Kohlenwasserstoff, beispielsweise C₂H₂ oder C₂H₄, enthält.

10. Gasgenerator nach Anspruch 9, **dadurch gekennzeichnet, daß** der ungesättigte Kohlenwasserstoff C₂H₂ ist.

11. Gasgenerator nach einem der Ansprüche 1 bis 10, **dadurch gekennzeichnet, daß** das Gasgemisch in dem Behälter unter einem Druck von 100 bis 300 bar steht.

12. Gasgenerator nach Anspruch 11, **dadurch gekennzeichnet, daß** das Gasgemisch in dem Behälter unter einem Druck von 180 bis 280 bar steht.

13. Gasgenerator nach einem der Ansprüche 1 bis 12, **dadurch gekennzeichnet, daß** die Zündeinrichtung eine aus einem Feststoff oder einer Flüssigkeit bestehende pyrotechnische Ladung ist, die vorzugsweise aus einem Gemisch von Brennstoff und Oxidationsmittel im stöchiometrischen Verhältnis besteht.

14. Gasgenerator nach einem der Ansprüche 1 bis 13, **dadurch gekennzeichnet, daß** der Behälterverschluß aus einem Schenkel (11) des winkeligen Verschlußteils besteht, der durch die auf den anderen Schenkel (12) wirkende pyrotechnische Ladung nach ihrer Zündung in seine geöffnete Stellung geschwenkt wird.

15. Gasgenerator nach einem der Ansprüche 1 bis 12, **dadurch gekennzeichnet, daß** die Zündeinrichtung aus einem Laser besteht.

16. Gasgenerator nach einem der vorhergehenden Ansprüche, **dadurch gekennzeichnet, daß** der Behälter neben dem Brennstoff Luft enthält.

17. Gasgenerator nach einem der vorhergehenden Ansprüche, **dadurch gekennzeichnet, daß** die Verbrennungskammer (10) Ausgänge (14) hat, die durch eine poröse Struktur, wie ein Netz (15), abgedeckt sind, und daß die Struktur einen katalytischen Stoff umfaßt.

## Claims

1. Gas generator, preferably for an inflatable airbag for protecting motor vehicle passengers, having a vessel (4) which contains a combustible gas mixture, is provided with a closure (3, 11) and opens out into a combustion chamber (10) which is provided with a gas outlet (14) and in which the gas mixture is ignited by an ignition device, **characterized in that** the vessel (4) is filled primarily with pressurized inert gas and contains from 0.1 to 5.0% by volume of a gaseous fuel and from 0.5 to 20% by volume of a gaseous oxidizing agent, in such a manner that the low concentration of fuel, after its ignition, does not automatically maintain the combustion, the ignition device, when it is initiated, opening the vessel closure (11), igniting the gas mixture which flows into the combustion chamber (10) and maintaining the combustion by the continuous supply of energy.

2. Gas generator according to Claim 1, **characterized in that** the gaseous fuel forms from 0.2 to 0.5% by volume and the gaseous oxidizing agent forms from 1 to 3% by volume of the gas mixture.

3. Gas generator according to Claim 1 or 2, **characterized in that** at least half of the hydrocarbon is a gaseous alkane.

4. Gas generator according to one of Claims 1 to 3, **characterized in that** the alkane is CH₄, C₂H₆, C₃H₈ or C₄H₁₀.

5. Gas generator according to Claim 4, **characterized in that** the alkane is C₃H₈.

6. Gas generator according to one of Claims 1 to 5, **characterized in that** the gaseous oxidizing agent is O₂, N₂O or H₂O₂.

7. Gas generator according to Claim 6, **characterized in that** the oxidizing agent is O₂.

8. Gas generator according to one of Claims 1 to 7, **characterized in that** the inert gas is Ar.

9. Gas generator according to one of Claims 1 to 8, **characterized in that** the gaseous fuel contains from 0 to 70% by volume and preferably about 50% by volume of hydrocarbon, additionally an unsaturated hydrocarbon, for example C₂H₂ or C₂H₄.

10. Gas generator according to Claim 9, **characterized in that** the unsaturated hydrocarbon is C₂H₂.

11. Gas generator according to one of Claims 1 to 10, **characterized in that** the gas mixture in the vessel is under a pressure of from 100 to 300 bar.

12. Gas generator according to Claim 11, **characterized in that** the gas mixture in the vessel is under a pressure of from 180 to 280 bar.

13. Gas generator according to one of Claims 1 to 12, **characterized in that** the ignition device is a pyrotechnic charge which consists of a solid or a liquid and preferably consists of a mixture of fuel and oxidizing agent in stoichiometric proportions.

14. Gas generator according to one of Claims 1 to 13, **characterized in that** the vessel closure comprises a limb (11) of the angled closure part, which is pivoted into its open position by the pyrotechnic charge acting on the other limb (12) after it has been ignited.

15. Gas generator according to one of Claims 1 to 12, **characterized in that** the ignition device comprises a laser.

16. Gas generator according to one of the preceding claims, **characterized in that** the vessel contains air as well as the fuel.

17. Gas generator according to one of the preceding claims, **characterized in that** the combustion chamber (10) has outlets (14) which are covered by a porous structure, such as a mesh (15), and **in that** the structure comprises a catalytic substance.

## Revendications

1. Générateur de gaz, avantageusement pour un coussin gonflable de collision pour la protection des occupants d'un véhicule automobile avec un récipient (4) contenant un mélange de gaz combustibles et pourvu d'une fermeture (3, 11), qui débouche dans une chambre de combustion (10) pourvue d'une sortie de gaz (14) dans laquelle le mélange de gaz est allumé par un système d'allumage,
**caractérisé en ce que**
le récipient (4) est principalement rempli d'un gaz inerte sous pression et contient 0,1 à 5,0% en volume d'un combustible gazeux et 0,5 à 20% en volume d'un agent d'oxydation gazeux de façon que la faible concentration en combustible après son allumage ne puisse maintenir d'elle-même la combustion et où le système d'allumage, à sa mise en marche, ouvre la fermeture (11) du récipient, allume le mélange de gaz arrivant dans la chambre de combustion (10) et maintient la combustion par fourniture continue d'énergie.

2. Générateur de gaz selon la revendication 1, **caractérisé en ce que** le combustible gazeux représente 0,2 à 0,5% en volume et la portion de l'agent d'oxydation gazeux, 1 à 3% en volume du mélange de gaz.

3. Générateur de gaz selon la revendication 1 ou 2, **caractérisé en ce qu'**au moins la moitié de l'hydrocarbure est un alcane gazeux.

4. Générateur de gaz selon l'une des revendications 1 à 3, **caractérisé en ce que** l'alcane est CH₄, C₂H₆, C₃H₈ ou C₄H₁₀.

5. Générateur de gaz selon la revendication 4, **caractérisé en ce que** l'alcane est C₃H₈.

6. Générateur de gaz selon l'une des revendications 1 à 5, **caractérisé en ce que** l'agent d'oxydation gazeux est O₂, N₂O ou H₂O₂.

7. Générateur de gaz selon la revendication 6, **caractérisé en ce que** l'agent d'oxydation est O₂.

8. Générateur de gaz selon l'une des revendidations 1 à 7, **caractérisé en ce que** le gaz inerte est Ar.

9. Générateur de gaz selon l'une des revendications 1 à 8, **caractérisé en ce que** le combustible gazeux contient 0 à 70% en volume et avantageusement environ 50% en volume d'hydrocarbure en plus d'un hydrocarbure insaturé, par exemple C₂H₂ ou C₂H₄.

10. Générateur de gaz selon la revendication 9, **caractérisé en ce que** l'hydrocarbure insaturé est C₂H₂.

11. Générateur de gaz selon l'une des revendications 1 à 10, **caractérisé en ce que** le mélange de gaz dans le récipient se trouve à une pression de 100 à 300 bars.

12. Générateur de gaz selon la revendication 11, **caractérisé en ce que** le mélange de gaz dans le récipient se trouve sous une pression de 180 à 280 bars.

13. Générateur de gaz selon l'une des revendications 1 12, **caractérisé en ce que** le système d'allumage est une charge pyrotechnique se composant d'une matière solide ou d'un liquide qui se compose avantageusement d'un mélange de combustible et agent d'oxydation à un rapport stoechiométrique.

14. Générateur de gaz selon l'une des revendications 1 à 13, **caractérisé en ce que** la fermeture du récipient se compose d'une branche (11) de la partie de fermeture en angle, qui est pivotée à sa position ouverte par la charge pyrotechnique agissant sur l'autre branche (12), après son allumage.

15. Générateur de gaz selon l'une des revendications 1 à 12, **caractérisé en ce que** le système d'allumage se compose d'un laser.

16. Générateur de gaz selon l'une des revendications précédentes, **caractérisé en ce que** le récipient, outre le combustible, contient de l'air.

17. Générateur de gaz selon l'une des revendications précédentes, **caractérisé en ce que** la chambre de combustion a des sorties (14) qui sont couvertes par une structure poreuse, comme un filet (15) et **en ce que** la structure contient une matière catalytique.
